# FASCICULE DE BREVET EUROPEEN

(11) **EP 1 642 870 B1**
(45) Date de publication et mention de la délivrance du brevet: **26.03.2008**
(21) Numéro de dépôt: 05077035.3
(22) Date de dépôt: 06.09.2005
(51) Int. Cl.: C03C 3/32

(54) **Verres de chalcogénures à base de Te pour transmission dans l'infrarouge moyen et lointain**
Chalcogenidgläser auf Basis von Tellur zur Transmission von Licht im mittleren und fernen Infrarotbereich
Chalcogenide glasses based on tellurium for transmitting infrared in the middle and far regions

(30) Priorité: 09.09.2004 EP 04292165
(43) Date de publication de la demande: 05.04.2006
(73) Titulaire: Umicore, 1000 Bruxelles (BE); Centre National de la Recherche Scientifique (CNRS), 75794 Paris Cedex 16 (FR)
(72) Inventeur: Danto, Sylvain, 35042 Rennes (FR); Zhang, Xiang Hua, 35042 Rennes (FR); Lucas, Jacques, 35042 Rennes (FR)
(74) Mandataire: Umicore RDI Patent Department

(56) Documents cités:
- US-A- 6 015 765
- DATABASE INSPEC [Online] THE INSTITUTION OF ELECTRICAL ENGINEERS, STEVENAGE, GB; KULAKOVA L A ET AL: "Synthesis and physical properties of Si(Ge)-Se-Te glasses" XP002317623 Database accession no. 7752460 & 3RD INTERNATIONAL CONFERENCE ON AMORPHOUS AND MICROCRYSTALLINE SEMICONDUCTORS 2-4 JULY 2002 ST. PETERSBURG, RUSSIA, vol. 37, no. 7, juillet 2003 (2003-07), pages 795-799, Semiconductors MAIK Nauka Russia ISSN: 1063-7826
- DATABASE INSPEC [Online] THE INSTITUTION OF ELECTRICAL ENGINEERS, STEVENAGE, GB; JUNG CHUL RHEE ET AL: "Effect of Ge addition on crystallization of Te-Ga-Se systems" XP002317624 Database accession no. 3801577 & BULLETIN OF UNIVERSITY OF OSAKA PREFECTURE, SERIES A, vol. 38, no. 1, 1989, pages 19-30, JAPAN ISSN: 0474-7844
- DATABASE INSPEC [Online] THE INSTITUTION OF ELECTRICAL ENGINEERS, STEVENAGE, GB; KVASKOV V B ET AL: "Anomalous Poole-Frenkel effect in glassy chalcogenide semiconductors" XP002317625 Database accession no. 1446132 & SOVIET PHYSICS - SEMICONDUCTORS, vol. 13, no. 3, mars 1979 (1979-03), pages 363-364, USA ISSN: 0038-5700
- DATABASE INSPEC [Online] THE INSTITUTION OF ELECTRICAL ENGINEERS, STEVENAGE, GB; HSIUNG S K ET AL: "Thermoelectric properties of splat-cooled amorphous In20Te80, Ga20Te80, and Ge15Te85" XP002317626 Database accession no. 1193805 & JOURNAL OF APPLIED PHYSICS, vol. 49, no. 1, janvier 1978 (1978-01), pages 280-284, USA ISSN: 0021-8979
- BLACHNIK R ET AL: "Experimental investigation and thermodynamic calculation of excess enthalpies in the Ga-In-Te system" JOURNAL OF ALLOYS AND COMPOUNDS, ELSEVIER SEQUOIA, LAUSANNE, CH, vol. 305, no. 1-2, juin 2000 (2000-06), pages 144-152, XP004198841 ISSN: 0925-8388

## Description

Les verres de chalcogénures, utilisés comme matériaux pour la transmission dans l'infrarouge, sont principalement représentés par des compositions à base de soufre ou de sélénium, associées à d'autres éléments comme le germanium, l'arsenic, le gallium, l'antimoine ou un halogène comme l'iode.

Tout verre destiné à l'élaboration d'éléments optiques massifs, tels des lentilles ou des fibres optiques, doit être suffisamment stable. Cette stabilité s'exprime d'une part par l'intervalle entre la température de transition vitreuse Tg (ramollissement) et la température de cristallisation Tₓ (dévitrification). Plus ce différentiel est important, plus le verre est facile à mettre en forme, par exemple par moulage à chaud. D'autre part, la stabilité de forme requiert une température de transition vitreuse Tg suffisamment élevée, en particulier plus élevée que la température d'exploitation des éléments optiques.

Plusieurs compositions de ce type sont des marques déposées, comme le verre AMTIR® I de composition Ge₃₃As₁₂Se₅₅ ou le verre GASIR® I de composition Ge₂₂As₂₀Se₅₈.

Quand les verres sont à base de soufre, le chalcogène le pus léger, ils transmettent la lumière infrarouge jusqu'à 10 µm pour des épaisseurs de l'ordre d'un millimètre. Quand les verres sont à base de sélénium, élément plus lourd, la transmission infrarouge s'étend jusqu'à 14 µm.

L'utilisation du Te, élément chalcogène encore plus lourd que le sélénium, pourrait donc sembler attrayante pour l'élaboration des verres transparents dans l'infrarouge lointain.

Toutefois, il est bien connu que, si le soufre ainsi que le sélénium vitrifient facilement par refroidissement du liquidus après la fusion des éléments, le tellure fondu est quant à lui impossible à vitrifier, même par trempe du liquidus. S'il existe certains verres à base de tellure, leur composition est souvent optimisée pour des applications spécifiques: ils ne présentent dès lors pas les qualités requises pour l'élaboration d'éléments optiques massifs destinés à la transmission dans l'infrarouge lointain.

Ainsi, certains verres connus à base de tellure sont des candidats pour des technologies comme le stockage optique de l'information et sont alors appelés matériaux à changement de phase en raison de la grande instabilité de la phase vitreuse qui ne peut être obtenue que sous forme de couches minces de quelques nanomètres. L'intérêt de ces verres réside alors dans leur transformation rapide et facile en phases cristallines. Toutefois, on estime que pour vitrifier les verres à changement de phase pour application DVD, il est nécessaire d'utiliser des vitesses de trempe très élevées, de l'ordre de 100 millions de degrés par seconde. Ce type de verres très instables a été étudié dans des systèmes tels que Te / Ge / Sb, le Te / Ge / In et le Te / Sb / Ag / In. Il n'est bien sûr pas exploitable pour la fabrication d'éléments optiques massifs.

D'autres compositions connues, telles le Ge / Te / Ga ou le Ge / Te / In, sont considérées comme ayant des propriétés électroniques remarquables en raison de leur caractère semi-conducteur (Cf. Glass formation and properties of glasses in germanium-tellurium-gallium and germanium-tellurium-indium systems, Apykhtin et al., Fizika i Khimiya Stekla (1980), 6(4), 383-8). Toutefois, les verres décrits ne présentent pas une stabilité thermique suffisante pour la fabrication d'éléments optiques massifs, l'intervalle Tg à Tₓ étant toujours de moins de 100 °C. Leur utilisation se situe dans le domaine des couches minces et leur application en optique infrarouge n'est pas mentionnée.

US 3,343,972 décrit des verres Te / As / Ge, riches en tellure et en arsenic, pour application en optique infrarouge. Leur fenêtre de transmission optique reste toutefois limitée à 25 µm. Seuls des verres ternaires sans Ga ont été réalisés et la stabilité thermique n'est pas rapportée.

US 6,015,765 quant à lui décrit des verres Te / As / Ge pouvant également contenir Ga, I₂, Se et In, possédant une stabilité thermique suffisante pour la fabrication d'éléments optiques massifs. Ces verres sont toutefois optimalisés pour une utilisation en amplification optique grâce à des éléments de dopage tels que des terres rares. La fenêtre de transmission optique reste limitée à 20 µm. Ces verres ne contiennent pas plus de 60 % de Te.

L'objet de la présente invention est l'élaboration d'un verre possédant une fenêtre de transmission optique allant de l'infrarouge proche à l'infrarouge lointain, tout en offrant une stabilité thermique suffisante pour envisager la production économiquement rentable d'éléments optiques massifs.

L'invention concerne en particulier un verre chalcogénure à base de Te, caractérisé par une température de transition Tg de plus de 140 °C, par une température de cristallisation Tₓ d'au moins 100 °C supérieure à Tg, ainsi que par une fenêtre de transmission infrarouge s'étendant de 2 à 30 µm.

Ce verre est préférentiellement composé selon la formule Geₓ Tey Gaz Mₘ,
M représentant au moins un composé choisi parmi la liste Ag, Al, As, Cu, In, Sn, Zn, I₂ et Pb,
x = 10-20%, y = 65 - 85%, z = 4 - 15%, m = 1 - 21%, et x + y + z + m = 100%.

Avantageusement, ce verre est caractérisé en ce que
x = 14 - 18%, y = 70 - 80%, z = 5 - 12%, m = 1 - 11%, et x + y + z + m = 100%.

Plus avantageusement, M représentant un seul composé parmi Ag, I₂, In, Pb, Sn, et Pbl₂, présent à un niveau de concentration maximal de 8% pour Ag, de 10% pour I₂, de 3% pour In, de 2% pour Pb, de 1% pour Sn et de 5% pour PbI₂.

La présente invention concerne aussi des éléments optiques destinés à la transmission du rayonnement infrarouge, comprenant un verre chalcogénure tel que défini ci-dessus, ainsi que la mise en oeuvre de ces verres pour la fabrication d'éléments optiques destinés à la transmission de rayonnement infrarouge telles que des lentilles ou des fibres optiques.

La fenêtre de transmission est ici définie comme la gamme de longueurs d'ondes pour laquelle au moins 10% de l'intensité incidente traverse un échantillon laminaire d'une épaisseur de 1 mm. Ce paramètre inclut les pertes de Fresnel, inévitables lors de la mesure d'un échantillon non muni de couches antireflet. Ces pertes sont conséquentes au vu de l'indice de réfraction du matériau qui est de l'ordre de 3 à 3.5.

Notons aussi que, dans ce document, tous les pourcentages sont exprimés en pourcentage atomique.

Le coeur de l'invention consiste donc à combiner une teneur en tellure particulièrement élevée (plus de 65%), avec de préférence trois autres éléments, dont le germanium et le gallium, ceci afin d'obtenir un verre aux caractéristiques exploitables pour la formation d'objets massifs. A titre d'exemple, un verre de très bonne qualité est obtenu en associant 71% Te, 14% Ge, 10% Ga et 5% Ag.

Le Tableau 1 regroupe d'autres exemples de compositions vitreuses selon l'invention ainsi que les caractéristiques thermiques des verres obtenus. Pour rappel, Tg est la température de transition vitreuse, Tₓ la température de cristallisation et T_{f} la température de fusion. La mesure de ces températures caractéristiques est effectuée à l'aide d'un appareillage DSC (analyse calorimétrique différentielle).

**Tableau 1: Caractérisation thermique de verres selon l'invention**

| **Composition** | **T_{g}(°C)** | **Tₓ (°C)** | **T_{f} (°C)** | **Tₓ - T_{g} (°C)** |
|---|---|---|---|---|
| Ag₅Ga_{9.5}Ge_{14.25}Te_{71.25} | 180 | 294 | 351 | 114 |
| Ag₅Ga₁₀Ge₁₅Te₇₀ | 188 | 288 | 342 | 100 |
| As₅Ga_{9.5}Ge_{14.25}Te_{71.25} | 171 | 277 | 346 | 106 |
| (PbI₂)₅Ga_{9.5}Ge_{14.25}Te_{71.25} | 160 | * | - | * |

| | | | | |
|---|---|---|---|---|
| * : pas de pic de cristallisation | | | | |
| - : non mesuré | | | | |

Un critère utilisé pour évaluer la stabilité des verres est l'intervalle Tg à Tₓ. Plus ce différentiel est grand et plus les verres sont stables. Nous obtenons des valeurs égales ou supérieures à 100 °C, ce qui est un écart suffisant pour envisager la préparation d'objets optiques massifs.

Les valeurs de Tg les plus élevées, correspondants aux verres les plus intéressants, sont atteintes pour le ternaire Ga / Ge / Te auquel est ajouté un quatrième élément M, notamment Ag, As ou PbI₂. L'addition d'un maximum de 5% de PbI₂ a pour effet de diminuer fortement l'enthalpie de cristallisation, et donc d'améliorer grandement la stabilité du verre.

De tels verres peuvent être préparés selon le protocole décrit ci-dessous, qui comprend les opérations suivantes.

Les éléments nécessaires sont pesés et dosés, les quantités adéquates étant faciles à déterminer par l'homme du métier. Les éléments utilisés doivent être de très grande pureté (5N), la contamination par l'oxygène devant en particulier être inférieure à 10 ppm.

Pour supprimer tout risque d'oxydation au cours du chauffage, les éléments sont introduits dans un montage en silice et l'ensemble est tiré sous vide à l'aide d'une pompe. Le tube réactionnel contenant les éléments est scellé à l'aide d'un chalumeau, alimenté par exemple au butane-oxygène.

Le tube réactionnel est ensuite placé dans un four basculant à 750 °C pendant 12 heures. Le bain fondu est sorti du four et trempé dans de l'eau froide. Une vitesse de trempe de l'ordre de 100 °C par seconde est adéquate.

Une vitesse critique de refroidissement, de seulement quelques dizaines de degré par seconde, permet d'obtenir des échantillons de l'ordre du centimètre d'épaisseur sans cristallisation dans la masse.

Pour améliorer les propriétés mécaniques des verres obtenus à l'issue de la trempe, les échantillons sont recuits pendant 2 heures à une température de Tg ― 20 °C.

Le Tableau 2 donne d'autres exemples de compositions selon l'invention.

**Tableau 2: Compositions (en % atomique) selon l'invention**

| **Ge** | **Te** | **Ga** | **M=Ag** |
|---|---|---|---|
| 15 | 75 | 5 | 5 |
| 14.25 | 71.25 | 9.5 | 5 |
| 10 | 75 | 10 | 5 |
| 15 | 70 | 10 | 5 |
| 10 | 70 | 15 | 5 |
| | | | |

| **Ge** | **Te** | **Ga** | **M = As** |
|---|---|---|---|
| 14.25 | 71.25 | 9.5 | 5 |
| 15 | 70 | 10 | 5 |
| 15 | 75 | 5 | 5 |
| 10 | 80 | 5 | 5 |
| | | | |

| **Ge** | **Te** | **Ga** | **M = PbI₂** |
|---|---|---|---|
| 14.25 | 71.25 | 9.5 | 5 |
| 15 | 70 | 10 | 5 |
| 15 | 75 | 5 | 5 |

## Revendications

1. Verre chalcogénure à base de Te, **caractérisé par** une température de transition T_{g} de plus de 140 °C, par une température de cristallisation Tₓ d'au moins 100 °C supérieure à T_{g}, ainsi que par une fenêtre de transmission infrarouge s'étendant de 2 à 30 µm.

2. Verre chalcogénure selon la revendication 1, **caractérisé par** la formule GeₓTe_{y}Ga_{z}Mₘ,
M représentant au moins un composé choisi parmi la liste Ag, Al, As, Cu, I₂, In, Pb, Sn, Zn et PbI₂, avec
x = 10 à 20%, y = 65 à 85%, z = 4 à 15%, m = 1 à 21%, et x + y + z + m = 100%.

3. Verre chalcogénure selon la revendication 2, **caractérisé en ce que**
x = 14 à 18%, y = 70 à 80%, z = 5 à 12%, et m = 1 à 11%.

4. Verre chalcogénure selon les revendications 2 ou 3, M représentant un composé parmi Ag, I₂, In, Pb, Sn, et PbI₂, présent à un niveau de concentration maximal de 8% pour Ag, de 10% pour I₂, de 3% pour In, de 2% pour Pb, de 1% pour Sn et de 5% pour PbI₂.

5. Utilisation d'un verre chalcogénure selon une quelconque des revendications 1 à 4 pour la fabrication d'un élément optique destiné à la transmission de rayonnement infrarouge.

6. Elément optique destiné à la transmission du rayonnement infrarouge, comprenant un verre chalcogénure selon une quelconque des revendications 1 à 4.

7. Elément optique selon la revendication 6, **caractérisée en ce qu**'il consiste en une lentille ou une fibre optique.

## Claims

1. Chalcogenide glass based on Te, **characterized by** a transition temperature T_{g} of at most 140°C, by a crystallization temperature Tₓ at least 100°C higher than T_{g} and by an infrared transmission window extending from 2 to 30 µm.

2. Chalcogenide glass according to Claim 1, **characterized by** the formula GeₓTe_{y}Ga_{z}Mₘ, M representing at least one compound chosen from the list Ag, Al, As, Cu, I₂, In, Pb, Sn, Zn and PbI₂, where x = 10 to 20%, y = 65 to 85%, z = 4 to 15%, m = 1 to 21% and x+y+z+m = 100%.

3. Chalcogenide glass according to Claim 2, **characterized in that** x = 14 to 18%, y = 70 to 80%, z = 5 to 12% and m = 1 to 11%.

4. Chalcogenide glass according to Claim 2 or 3, M representing a compound chosen Ag, I₂, In, Pb, Sn and PbI₂, present with a maximum level of concentration of 8% in the case of Ag, 10% in the case of I₂, 3% in the case of In, 2% in the case of Pb, 1% in the case of Sn and 5% in the case of PbI₂.

5. Use of a chalcogenide glass according to any one of Claims 1 to 4 for the manufacture of an optical element intended for transmitting infrared radiation.

6. Optical element intended for transmitting infrared radiation, comprising a chalcogenide glass according to any one of Claims 1 to 4.

7. Optical element according to Claim 6, **characterized in that** it consists of a lens or an optical fibre.

## Patentansprüche

1. Chalkogenidglas auf Basis von Te, **gekennzeichnet durch** eine Übergangstemperatur T_{g} von mehr als 140°C, eine Kristallisationstemperatur Tₓ, die mindestens 100°C über T_{g} liegt, sowie ein Infrarottransmissionsfenster, das sich von 2 bis 30 µm erstreckt.

2. Chalkogenidglas nach Anspruch 1, **gekennzeichnet durch** die Formel GeₓTe_{y}Ga_{z}Mₘ,
wobei M für mindestens eine aus der Liste Ag, Al, As, Cu, I₂, In, Pb, Sn, Zn und PbI₂ ausgewählte Verbindung steht, mit
x = 10 bis 20%, y = 65 bis 85%, z = 4 bis 15%, m = 1 bis 21% und x + y + z + m = 100%.

3. Chalkogenidglas nach Anspruch 2, **dadurch gekennzeichnet, daß**
x = 14 bis 18%, y = 70 bis 80%, z = 5 bis 12% und m = 1 bis 11%.

4. Chalkogenidglas nach Anspruch 2 oder 3, wobei M für eine unter Ag, I₂, In, Pb, Sn und PbI₂ ausgewählte Verbindung steht, die in einer Höchstkonzentration von 8% für Ag, 10% für I₂, 3% für In, 2% für Pb, 1% für Sn und 5% für PbI₂ vorliegt.

5. Verwendung eines Chalkogenidglases nach einem der Ansprüche 1 bis 4 zur Herstellung eines optischen Elements zur Transmission von Infrarotstrahlung.

6. Optisches Element zur Transmission von Infrarotstrahlung, umfassend ein Chalkogenidglas nach einem der Ansprüche 1 bis 4.

7. Optisches Element nach Anspruch 6, **dadurch gekennzeichnet, daß** es aus einer Linse oder einer Lichtleitfaser besteht.
